(19) Europäisches Patentamt
European Patent Office
Office européen des brevets

(11) **EP 4 129 915 A1**

(12) **EUROPEAN PATENT APPLICATION**
published in accordance with Art. 153(4) EPC

(43) Date of publication:
**08.02.2023 Bulletin 2023/06**

(21) Application number: **21781030.8**

(22) Date of filing: **04.03.2021**

(51) International Patent Classification (IPC):
$C01F\ 17/36$ (2020.01)      $C01F\ 17/10$ (2020.01)
$H01B\ 13/00$ (1968.09)      $H01M\ 10/052$ (2010.01)
$H01M\ 10/0562$ (2010.01)

(52) Cooperative Patent Classification (CPC):
C01F 17/10; C01F 17/36; H01B 13/00;
H01M 10/052; H01M 10/0562; Y02E 60/10

(86) International application number:
**PCT/JP2021/008437**

(87) International publication number:
**WO 2021/199890 (07.10.2021 Gazette 2021/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2020 JP 2020064768**

(71) Applicant: **Panasonic Intellectual Property Management Co., Ltd.**
**Osaka-shi, Osaka 540-6207 (JP)**

(72) Inventors:
• **KUBO, Takashi**
  **Osaka-shi, Osaka 540-6207 (JP)**
• **MIYATAKE, Kazufumi**
  **Osaka-shi, Osaka 540-6207 (JP)**
• **HAYASHI, Yohei**
  **Osaka-shi, Osaka 540-6207 (JP)**
• **NISHIO, Yusuke**
  **Osaka-shi, Osaka 540-6207 (JP)**
• **SAKAI, Akihiro**
  **Osaka-shi, Osaka 540-6207 (JP)**

(74) Representative: **Eisenführ Speiser**
**Patentanwälte Rechtsanwälte PartGmbB**
**Postfach 10 60 78**
**28060 Bremen (DE)**

(54) **METHOD FOR PRODUCING HALIDE**

(57) The production method of the present disclosure includes a heat treatment step of heat-treating a material mixture containing a compound containing Y, a compound containing Gd, $NH_4\alpha$, $Li\beta$, and $Ca\gamma_2$ in an inert gas atmosphere. The compound containing Y is at least one selected from the group consisting of $Y_2O_3$ and $Y\delta_3$, and the compound containing Gd is at least one selected from the group consisting of $Gd_2O_3$ and $Gd\varepsilon_3$. The material mixture contains at least one selected from the group consisting of $Y_2O_3$ and $Gd_2O_3$, and $\alpha$, $\beta$, $\gamma$, $\delta$, and $\varepsilon$ are each independently at least one selected from the group consisting of F, Cl, Br, and I.

## FIG. 1

```
      START
        |
        |        ~ S1000
  HEAT TREATMENT STEP
        |
        |
       END
```

**Description**

Technical Field

The present disclosure relates to a method for producing a halide.

Background Art

PTL 1 discloses a method for producing a halide solid electrolyte.

Citation List

Patent Literature

PTL 1: International Publication No. WO2018/025582

Summary of Invention

Technical Problem

It is an object of the present disclosure to provide a halide production method with high industrial productivity.

Solution to Problem

The production method of the present disclosure includes a heat treatment step of heat-treating a material mixture containing a compound containing Y, a compound containing Gd, $NH_4\alpha$, $Li\beta$, and $Ca\gamma_2$ in an inert gas atmosphere. The compound containing Y is at least one selected from the group consisting of $Y_2O_3$ and $Y\delta_3$, and the compound containing Gd is at least one selected from the group consisting of $Gd_2O_3$ and $Gd\varepsilon_3$. The material mixture contains at least one selected from the group consisting of $Y_2O_3$ and $Gd_2O_3$, and $\alpha$, $\beta$, $\gamma$, $\delta$, and $\varepsilon$ are each independently at least one selected from the group consisting of F, Cl, Br, and I.

Advantageous Effects of Invention

The present disclosure provides a halide production method with high industrial productivity.

Brief Description of Drawings

[Fig. 1] Fig. 1 is a flowchart showing an example of a production method in a first embodiment.
[Fig. 2] Fig. 2 is a flowchart showing an example of the production method in the first embodiment.
[Fig. 3] Fig. 3 is a flowchart showing an example of the production method in the first embodiment.
[Fig. 4] Fig. 4 is a flowchart showing an example of a production method in a second embodiment.
[Fig. 5] Fig. 5 is a graph showing an example of a heat treatment temperature profile in the production method in the second embodiment.
[Fig. 6] Fig. 6 is a schematic illustration of a press forming die 200 used to evaluate the ionic conductivity of a solid electrolyte material.
[Fig. 7] Fig. 7 is a graph showing a Cole-Cole plot obtained by the measurement of the impedance of a solid electrolyte material in sample 1.

Description of Embodiments

Embodiments will next be described with reference to the drawings.

(First embodiment)

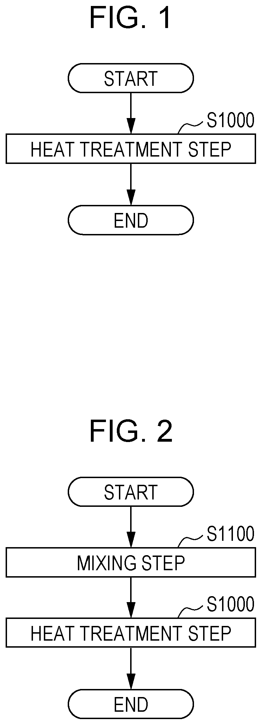

Fig. 1 is a flowchart showing an example of a production method in a first embodiment.
The production method in the first embodiment includes a heat treatment step S1000. In the heat treatment step S1000, a material mixture is heat-treated in an inert gas atmosphere.

The material mixture heat-treated in the heat treatment step S1000 is a material prepared by mixing a compound containing Y, a compound containing Gd, $NH_4\alpha$, $Li\beta$, and $Ca\gamma_2$. The compound containing Y is at least one selected from the group consisting of $Y_2O_3$ and $Y\delta_3$. The compound containing Gd is at least one selected from the group consisting of $Gd_2O_3$ and $Gd\varepsilon_3$. The material mixture contains at least one selected from the group consisting of $Y_2O_3$ and $Gd_2O_3$. $\alpha$, $\beta$, $\gamma$, $\delta$, and $\varepsilon$ are each independently at least one selected from the group consisting of F, Cl, Br, and I. The "compound containing Y" and the "compound containing Gd" will be hereinafter referred to as an "Y-containing compound" and a "Gd-containing compound," respectively.

The production method in the first embodiment is a halide production method with high industrial productivity. The method with high industrial productivity is, for example, a method capable of mass production at low cost. Specifically, this production method allows a halide containing Li (i.e., lithium), Y (i.e., yttrium), Gd (i.e., gadolinium), and Ca (i.e., calcium) to be produced in a simple manner (i.e., by sintering in an inert gas atmosphere).

In the production method in the first embodiment, a vacuum sealed tube and a planetary ball mill may not be used.

The material mixture may contain $Y_2O_3$, $Gd_2O_3$, $NH_4\alpha$, $Li\beta$, and $Ca\gamma_2$. $Y_2O_3$, $Gd_2O_3$, and $NH_4\alpha$ contained in the material mixture are inexpensive, so that the production cost can be reduced.

To further improve the ionic conductivity of the halide, $\alpha$, $\beta$, $\gamma$, $\delta$, and $\varepsilon$ may each independently be at least one selected from the group consisting of Cl and Br.

For example, when $Y_2O_3$, $Gd_2O_3$, $NH_4\alpha$, $Li\alpha$ (i.e., $\beta$ in $Li\beta$ is $\alpha$), and $Ca\alpha_2$ (i.e., $\gamma$ in $Ca\gamma_2$ is $\alpha$) are used to produce $Li_{2.8}Ca_{0.1}Y_{0.5}Gd_{0.5}\alpha_6$, the reaction represented by the following formula (1) may proceed in the system as a whole.

$$0.5Y_2O_3 + 0.5Gd_2O_3 + 12NH_4\alpha + 6Li\alpha + 0.2Ca\alpha_2 \rightarrow 2Li_{2.8}Ca_{0.1}Y_{0.5}Gd_{0.5}\alpha_6 +$$

$$12NH_3 + 6H\alpha + 3H_2O \quad (1)$$

In the heat treatment step S1000, for example, the powder of the material mixture may be placed in a container (e.g., a crucible) and heat-treated in a heating furnace. In this case, the material mixture heated to a prescribed temperature in the inert gas atmosphere may be held at the prescribed temperature for a prescribed time period or more. The heat treatment time period may be the length of time that does not cause a change in the composition of the heat-treated product due to volatilization of the halide etc. The heat treatment time period that does not cause a change in the composition of the heat-treated product means a heat treatment time period that does not cause deterioration of the ionic conductivity of the heat-treated product. With the production method in the first embodiment, a halide having, for example, an ionic conductivity higher than or equal to $3.0 \times 10^{-9}$ S/cm at around room temperature can be produced.

The inert gas atmosphere means, for example, an atmosphere in which the total concentration of gases other than the inert gas is lower than or equal to 1% by volume. Examples of the inert gas include helium, nitrogen and argon.

After the heat treatment step S1000, the heat-treated product may be pulverized. In this case, a pulverizing apparatus (such as a mortar or a mixer) may be used.

Part of metal cations in at least one selected from the group consisting of the Y-containing compound, the Gd-containing compound, $Li\beta$, and $Ca\gamma_2$ that are contained in the material mixture may be replaced with other metal cations. Specifically, part of Y, Gd, Li, and Ca may be replaced with other metal cations. In other words, the material mixture may further contain an Y-containing compound with part of Y replaced with other metal cations, a Gd-containing compound with part of Gd replaced with other metal cations, a compound containing $Li\beta$ with part of Li replaced with other metal cations, or a compound containing $Ca\gamma_2$ with part of Ca replaced with other metal cations. In this case, the characteristics (e.g., ionic conductivity) of the halide produced can be improved. The rate of replacement of Y, Gd, Li, and Ca with other metal cations may be less than 50 mol%. In this case, the halide obtained has a more stable structure.

Part of metal cations in at least one selected from the group consisting of the Y-containing compound, the Gd-containing compound, $Li\beta$, and $Ca\gamma_2$ that are contained in the material mixture may be replaced with, for example, at least one type of cations selected from the group consisting of Na, K, Mg, Sr, Ba, Zn, In, Sn, Bi, La, Ce, Pr, Nd, Pm, Sm, Eu, Tb, Dy, Ho, Er, Tm, Yb, and Lu.

The material mixture may be a material prepared by mixing the Y-containing compound, the Gd-containing compound, $NH_4\alpha$, $Li\beta$, and $Ca\gamma_2$.

Alternatively, the material mixture may be a material prepared by mixing the Y-containing compound, the Gd-containing compound, $NH_4\alpha$, $Li\beta$, and $Ca\gamma_2$ and further mixing a material other than $Y_2O_3$, $Y\delta_3$, $Gd_2O_3$, $Gd\varepsilon_3$, $NH_4\alpha$, $Li\beta$, and $Ca\gamma_2$.

In the heat treatment step S1000, the material mixture may be heat-treated at higher than or equal to 350°C. In this case, the industrial productivity of the method is high, and the halide produced thereby can have high ionic conductivity. When the heat treatment temperature is higher than or equal to 350°C, the reaction of the material mixture can proceed sufficiently. Specifically, the Y-containing compound, the Gd-containing compound, $NH_4\alpha$, $Li\beta$, and $Ca\gamma_2$ can be allowed to react sufficiently. When the material mixture is heat-treated at higher than or equal to 350°C, the halide produced can have, for example, an ionic conductivity higher than or equal to $1.0 \times 10^{-4}$ S/cm at around room temperature. Here, the heat treatment temperature is an ambient temperature.

To produce a halide having higher ionic conductivity using the highly industrially productive method, the material mixture may be heat-treated at lower than or equal to 700°C. The material mixture may be heat-treated at, for example, higher than or equal to 350°C and lower than or equal to 700°C. When the heat treatment temperature is lower than or equal to 700°C, the halide formed by the solid phase reaction can be prevented from undergoing thermal decomposition. In this case, the ionic conductivity of the halide, which is the heat-treated product, can be increased. Specifically, the halide solid electrolyte material obtained has high quality.

To produce a halide having higher ionic conductivity using the highly industrially productive method, the material mixture may be heat-treated at lower than or equal to 650°C. The material mixture may be heat-treated at, for example, higher than or equal to 350°C and lower than or equal to 650°C. In this case, the halide formed by the solid phase reaction can be prevented from undergoing thermal decomposition. Therefore, the ionic conductivity of the halide, which is the heat-treated product, can be increased. Specifically, the halide solid electrolyte material obtained has high quality.

In formula (1) above, $Y_2O_3$, $Gd_2O_3$, and $NH_4\alpha$ may be first reacted with each other, and then $Y_2O_3$ and $Gd_2O_3$ may be halogenated. Next, a heat treatment profile may be set such that the halogenated $Y_2O_3$ and $Gd_2O_3$ are reacted with $Li\beta$ and $Ca\gamma_2$. In this case, the heat treatment temperature may be a temperature that is lower than the sublimation point or melting point of $NH_4\alpha$ and allows the halogenated $Y_2O_3$ and $Gd_2O_3$ to react with $Li\beta$ and $Ca\gamma_2$. Specifically, the heat treatment temperature may be a temperature that is lower than the sublimation point or melting point of $NH_4\alpha$ and allows the halide solid electrolyte material to be formed.

For example, when $Y_2O_3$, $Gd_2O_3$, $NH_4Cl$, $LiCl$, and $CaCl_2$ are used to synthesize $Li_{2.8}Ca_{0.1}Y_{0.5}Gd_{0.5}Cl_6$, the reaction represented by formula (2) below may proceed.

$$0.5Y_2O_3 + 0.5Gd_2O_3 + 12NH_4Cl + 5.6LiCl + 0.2CaCl_2 \rightarrow 2Li_{2.8}Ca_{0.1}Y_{0.5}Gd_{0.5}Cl_6$$

$$+ 12NH_3 + 6HCl + 3H_2O \quad (2)$$

The heat treatment temperature in this reaction may be set to about 300°C. Specifically, the heat treatment temperature may be set to a temperature that is lower than about 335°C, which is the sublimation point of $NH_4Cl$, and allows the halide solid electrolyte material to be formed. To produce a halide having higher ionic conductivity, the heat treatment temperature may be higher than or equal to 350°C. In this case, as shown in a second embodiment described later, the heat treatment step may include two or more sub-steps. In this case, the heat treatment temperature in the first sub-step in the heat treatment step may be set to a temperature lower than the sublimation point of $NH_4\alpha$, and the heat treatment temperature in the second and later sub-steps in the heat treatment step may be set to a higher temperature.

The material mixture may be heat-treated in more than or equal to 1 hour and less than or equal to 72 hours. In this case, the industrial productivity of the method is high, and the halide produced thereby can have higher ionic conductivity. When the heat treatment time period is more than or equal to 1 hour, the reaction of the material mixture can proceed sufficiently. Specifically, the Y-containing compound, the Gd-containing compound, $NH_4\alpha$, $Li\beta$, and $Ca\gamma_2$ can be allowed to react sufficiently. When the heat treatment time period is less than or equal to 72 hours, the halide, which is the heat-treated product, can be prevented from volatilizing. Specifically, the halide obtained has the target composition ratio. Therefore, a reduction in the ionic conductivity of the halide due to a change in the composition can be prevented. Specifically, the halide solid electrolyte material obtained can have better quality.

Fig. 2 is a flowchart showing an example of the production method in the first embodiment.

As shown in Fig. 2, the production method in the first embodiment may further include a mixing step S1100.

The mixing step S 1100 is performed before the heat treatment step S 1000.

In the mixing step S1100, the Y-containing compound, the Gd-containing compound, $NH_4\alpha$, $Li\beta$, and $Ca\gamma_2$ are mixed. A material mixture is thereby obtained. Specifically, the material to be heat-treated in the heat treatment step S 1000 is obtained.

To mix the raw materials, a well-known mixer (such as a mortar, a blender, or a ball mill) may be used.

For example, in the mixing step S1100, powders of the raw materials may be prepared and mixed. In this case, in the heat treatment step S 1000, the material mixture in a powder form may be heat-treated. The powdery material mixture obtained in the mixing step S1100 may be pressed and formed into pellets. In the heat treatment step S1000, the material mixture in the form of pellets may be heat-treated.

In the mixing step S1100, in addition to the Y-containing compound, the Gd-containing compound, $NH_4\alpha$, $Li\beta$, and $Ca\gamma_2$, a material other than $Y_2O_3$, $Y\delta_3$, $Gd_2O_3$, $Gd\epsilon_3$, $NH_4\alpha$, $Li\beta$, and $Ca\gamma_2$ may be further mixed to obtain a material mixture.

In the mixing step S1100, a raw material containing the Y-containing compound as a main component, a raw material containing the Gd-containing compound as a main component, a raw material containing $NH_4\alpha$ as a main component, a raw material containing $Li\beta$ as a main component, and a raw material containing $Ca\gamma_2$ as a main component may be mixed. The main component is a component whose molar ratio is highest.

In the mixing step S1100, the Y-containing compound, the Gd-containing compound, $NH_4\alpha$, $Li\beta$, and $Ca\gamma_2$ may be prepared such that the target composition is satisfied and then mixed.

When $Y_2O_3$ and $Gd_2O_3$ are used as the Y-containing compound and the GD-containing compound, respectively, $Y_2O_3$, $Gd_2O_3$, $NH_4Cl$, $LiCl$, and $CaCl_2$ may be mixed such that, for example, $Y_2O_3:Gd_2O_3:NH_4Cl:LiCl:CaCl_2 = 0.25:0.25:6:2.8:0.1$. In this case, a halide having a composition represented by $Li_{2.8}Ca_{0.1}Y_{0.5}Gd_{0.5}Cl_6$ can be produced.

The molar ratio of the Y-containing compound, the Gd-containing compound, $NH_4\alpha$, $Li\beta$, and $Ca\gamma_2$ may be adjusted in advance so as to compensate for the change in the composition that may occur in the heat treatment step S1000.

To allow the synthesis reaction in the heat treatment step S1000 to proceed preferably, the amount of $NH_4\alpha$ prepared may be in excess of the total amount of $Y_2O_3$ and $Gd_2O_3$. For example, the amount of $NH_4\alpha$ prepared is larger by 5 to 15 mol% than the total amount of $Y_2O_3$ and $Gd_2O_3$.

In the mixing step S 1100, part of metal cations in at least one selected from the group consisting of the Y-containing compound, the Gd-containing compound, $Li\beta$, and $Ca\gamma_2$ may be replaced with other metal cations. Specifically, part of Y, Gd, Li, and Ca may be replaced with other metal cations. In other words, an Y-containing compound with part of Y replaced with other metal cations, a Gd-containing compound with part of Gd replaced with other metal cations, a compound containing $Li\beta$ with part of Li replaced with other metal cations, or a compound containing $Ca\gamma_2$ with part of Ca replaced with other metal cations may be further mixed to obtain a material mixture. The rate of replacement of Y, Gd, Li, and Ca with metal cations may be less than 50 mol%.

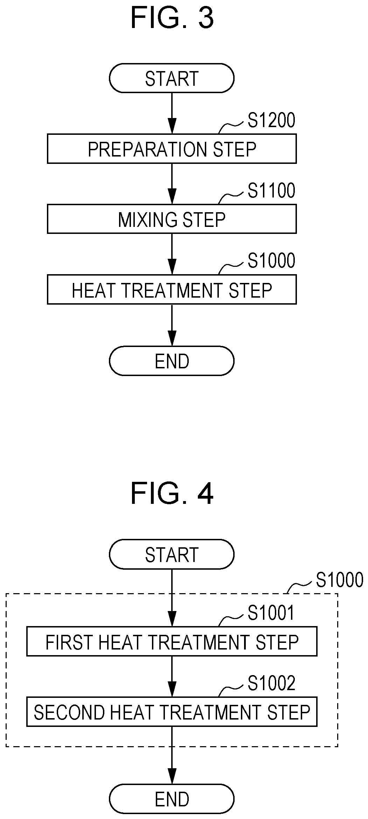

Fig. 3 is a flowchart showing an example of the production method in the first embodiment.

As shown in Fig. 3, the production method in the first embodiment may further include a preparation step S1200.

The preparation step S1200 is performed before the mixing step S1100.

In the preparation step S1200, raw materials such as the Y-containing compound, the Gd-containing compound, $NH_4\alpha$, $Li\beta$, and $Ca\gamma_2$ are prepared. Specifically, the materials to be mixed in the mixing step S 1100 are prepared.

In the preparation step S1200, the raw materials such as the Y-containing compound, the Gd-containing compound, $NH_4\alpha$, $Li\beta$, and $Ca\gamma_2$ may be synthesized. Alternatively, in the preparation step S1200, for example, materials with a purity higher than or equal to 99% may be used.

The materials prepared may be dried.

Examples of the form of each of the materials prepared include a crystalline form, a lump form, a flake form, and a powder form. In the preparation step S1200, crystalline, lump-like, or flake-like raw materials may be pulverized to obtain powdery raw materials.

In the preparation step S1200, part of metal cations in at least one selected from the group consisting of the Y-containing compound, the Gd-containing compound, $Li\beta$, and $Ca\gamma_2$ may be replaced with other metal cations. Specifically, part of Y, Gd, Li, and Ca may be replaced with other metal cations. In other words, an Y-containing compound with part of Y replaced with other metal cations, a Gd-containing compound with part of Gd replaced with other metal cations, a compound containing $Li\beta$ with part of Li replaced with other metal cations, or a compound containing $Ca\gamma_2$ with part of Ca replaced with other metal cations may be further prepared. The rate of replacement of Y, Gd, Li, and Ca with other metal cations may be less than 50 mol%.

The halide produced by the production method in the first embodiment can be used as a solid electrolyte material. This solid electrolyte material is, for example, a solid electrolyte material having lithium ion conductivity. This solid electrolyte material is used, for example, for an all-solid-state lithium ion secondary battery.

(Second embodiment)

A second embodiment will next be described. Features already described in the first embodiment will be omitted appropriately.

Fig. 4 is a flowchart showing an example of a production method in the second embodiment.

In the production method in the second embodiment, a heat treatment step S1000 includes a first heat treatment step S1001 and a second heat treatment step S1002. The second heat treatment step S1002 is performed after the first heat treatment step S1001.

In the first heat treatment step S1001, the material mixture is heat-treated at first heat treatment temperature T1. In the second heat treatment step S1002, the material mixture is heat-treated at second heat treatment temperature T2. The second heat treatment temperature T2 is higher than or equal to 350°C and is higher than the first heat treatment temperature T1.

The production method in the second embodiment is a highly industrially productive method for producing a halide having higher ionic conductivity.

The production method in the second embodiment will next be described using an example in which the material mixture contains $Y_2O_3$ and $Gd_2O_3$.

In the first heat treatment step S1001, $Y_2O_3$, $Gd_2O_3$, and $NH_4\alpha$ are reacted with each other at the first heat treatment temperature T1. Specifically, $Y_2O_3$ and $Gd_2O_3$ are halogenated. In the second heat treatment step S1002, the halogenated $Y_2O_3$ and $Gd_2O_3$ are reacted with $Li\beta$ and $Ca\gamma_2$ at the second heat treatment temperature T2. In this case, the halide, which is the heat-treated product, has higher crystallinity. Therefore, the ionic conductivity of the halide that is the heat-treated product can be increased. Specifically, the halide solid electrolyte material obtained has high quality.

To produce a halide having higher ionic conductivity using the highly industrially productive method, the first heat treatment temperature T1 may be higher than or equal to 160°C and lower than 350°C. When the first heat treatment temperature T1 is higher than or equal to 160°C, the reaction of the material mixture can proceed sufficiently. Specifically, $Y_2O_3$, $Gd_2O_3$, and $NH_4\alpha$ can be allowed to react sufficiently. When the first heat treatment temperature T1 is lower than 350°C, the sublimation of $NH_4\alpha$ can be prevented. In this manner, the ionic conductivity of the halide, which is the heat-treated product, can be increased. Specifically, the halide solid electrolyte material obtained has high quality.

To produce a halide having higher ionic conductivity using the highly industrially productive method, the second heat treatment temperature T2 may be higher than or equal to 350°C and lower than or equal to 700°C. When the second heat treatment temperature T2 is higher than or equal to 350°C, the reaction of the material mixture can proceed sufficiently. Specifically, the Y-containing compound, the Gd-containing compound, $NH_4\alpha$, $Li\beta$, and $Ca\gamma_2$ can be allowed to react sufficiently. In this case, the halide, which is the heat-treated product, has higher crystallinity. When the second heat treatment temperature T2 is lower than or equal to 700°C, the halide formed by the solid phase reaction can be prevented from undergoing thermal decomposition. In this case, the ionic conductivity of the halide that is the heat-treated product can be increased. Specifically, the halide solid electrolyte material obtained has high quality.

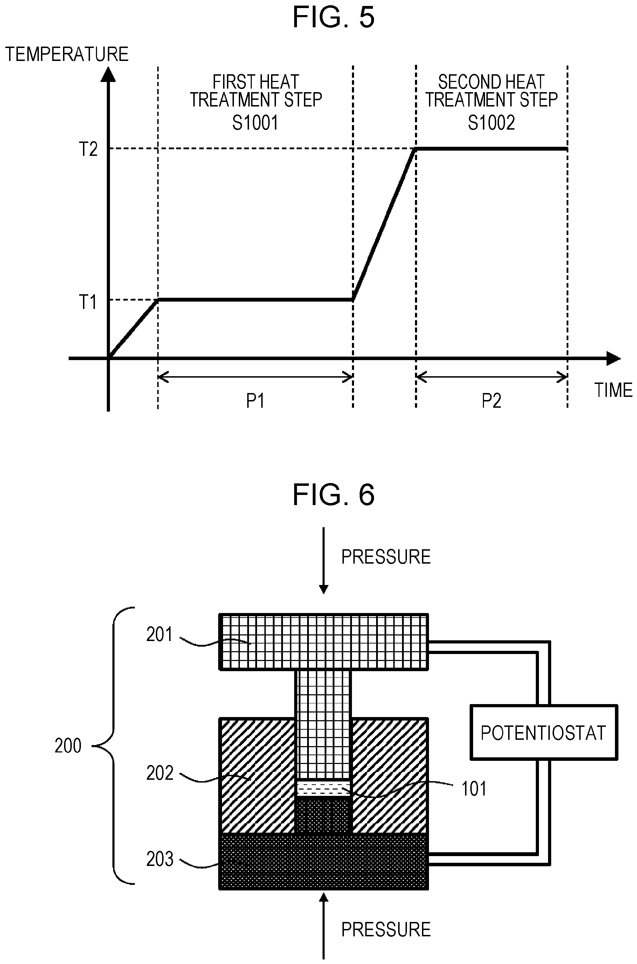

Fig. 5 is a graph showing an example of a heat treatment temperature profile in the production method in the second embodiment.

As shown in Fig. 5, in the first heat treatment step S1001, the material mixture may be heat-treated for a first heat treatment time period P1. In the second heat treatment step S1002, the material mixture may be heat-treated for a second heat treatment time period P2.

To produce a halide having higher ionic conductivity using the highly industrially productive method, the first heat treatment time period P1 may be more than or equal to 1 hour and less than or equal to 72 hours. When the first heat treatment time period P1 is more than or equal to 1 hour, the material mixture (i.e., $Y_2O_3$, $Gd_2O_3$, and $NH_4\alpha$) can be allowed to react sufficiently. When the first heat treatment time period P1 is less than or equal to 72 hours, the "reaction product of $Y_2O_3$ and $NH_4\alpha$" and the "reaction product of $Gd_2O_3$ and $NH_4\alpha$" can be prevented from volatilizing. Specifically, the halide obtained has the target composition ratio. Therefore, a reduction in the ionic conductivity of the halide due to a change in the composition can be prevented. Specifically, the halide solid electrolyte material obtained has higher quality.

To produce a halide having higher ionic conductivity using the highly industrially productive method, the second heat treatment time period P2 may be more than or equal to 1 hour and less than or equal to 72 hours. When the second heat treatment time period P2 is more than or equal to 1 hour, the reaction of the material mixture can proceed sufficiently. Specifically, the Y-containing compound, the Gd-containing compound, $NH_4\alpha$, $Li\beta$, and $Ca\gamma_2$ can be allowed to react sufficiently. When the second heat treatment time period P2 is less than or equal to 72 hours, the halide, which is the heat-treated product, can be prevented from volatilizing. Specifically, the halide obtained has the target composition ratio. Therefore, a reduction in the ionic conductivity of the halide due to a change in the composition can be prevented. Specifically, the halide solid electrolyte material obtained has higher quality.

P1 > P2 may be satisfied. Specifically, the first heat treatment time period P1 may be more than the second heat treatment time period P2. In this case, the halide produced using the highly industrially productive method can have higher ionic conductivity.

In the first heat treatment step S1001, the material mixture (i.e., $Y_2O_3$, $Gd_2O_3$, and $NH_4\alpha$) can be allowed to react sufficiently at the first heat treatment temperature T1 for the first heat treatment time period P1. Specifically, $Y_2O_3$ and $Gd_2O_3$ can be halogenated sufficiently. Next, in the second heat treatment step S1002, the sufficiently halogenated $Y_2O_3$ and $Y\delta_3$ and the sufficiently halogenated $Gd_2O_3$ and $Gd\varepsilon_3$ are reacted with $Li\beta$ and $Ca\gamma_2$ at the second heat treatment temperature T2 for the second heat treatment time period P2. In this case, the halide, which is the heat-treated product, has higher crystallinity. Therefore, the halide that is the heat-treated product can have higher ionic conductivity. Specifically, the halide solid electrolyte material obtained has high quality.

In the first heat treatment step S1001, $(NH_4)_aY\alpha_{3+a}$ ($0 \leq a \leq 3$) may be synthesized from $Y_2O_3$ and $NH_4\alpha$.

$(NH_4)_bGd\alpha_{3+b}$ ($0 \le b \le 3$) may be synthesized from $Gd_2O_3$ and $NH_4\alpha$.

In the second heat treatment step S1002, the $(NH_4)_aY\alpha_{3+a}$ and $(NH_4)_bGd\alpha_{3+b}$ produced in the first heat treatment step S1001 may be reacted with $Li\beta$ and $Ca\gamma_2$ to thereby obtain a halide (i.e., a solid electrolyte material).

Suppose, for example, that $Y_2O_3$, $Gd_2O_3$, $NH_4Cl$, $LiCl$, and $CaCl_2$ are used to synthesize $Li_{2.8}Ca_{0.1}Y_{0.5}Gd_{0.5}Cl_6$. The first heat treatment temperature T1 is about 200°C, and the second heat treatment temperature T2 is about 500°C. In this case, $NH_4Cl$ is reacted with $Y_2O_3$ and $Gd_2O_3$ without sublimation in the first heat treatment step S1001, and $(NH_4)_aY\alpha_{3+a}$ ($0 \le a \le 3$) and $(NH_4)_bGd\alpha_{3+b}$ ($0 \le b \le 3$) are mainly produced. Next, in the second heat treatment step S1002, $(NH_4)_aY\alpha_{3+a}$ and $(NH_4)_bGd\alpha_{3+b}$ are reacted with $LiCl$ and $CaCl_2$, and a halide solid electrolyte material having high crystallinity is thereby obtained. The halide solid electrolyte material obtained in the manner described above has high ionic conductivity.

The heat treatment step S1000 may include, in addition to the first heat treatment step S1001 and the second heat treatment step S1002, an additional heat treatment step. Specifically, the heat treatment step S1000 may include three or more sub-steps depending on the types of raw materials or the number of raw materials.

EXAMPLES

The present disclosure will next be described in more detail.

In the following description, halides produced by the production method of the present disclosure were evaluated as solid electrolyte materials.

<Sample 1>

(Production of solid electrolyte material)

In an argon atmosphere with a dew point lower than or equal to -60°C and an oxygen concentration lower than or equal to 0.0001% by volume (this atmosphere is hereinafter referred to as a "dry argon atmosphere"), powders of $Y_2O_3$, $Gd_2O_3$, $NH_4Cl$, $LiCl$, $LiBr$, and $CaBr_2$ were prepared as raw material powders such that the molar ratio $Y_2O_3:Gd_2O_3:NH_4Cl:LiCl:LiBr:CaBr_2 = 0.25:0.25:6.6:0.5:2.35:0.075$. These materials were pulverized in an agate mortar and mixed. The mixture obtained was placed in an alumina crucible and heat-treated in a nitrogen atmosphere at 500°C for 1 hour. Specifically, the heat treatment temperatures T1 and T2 were both 500°C. The heat-treated product obtained was pulverized in an agate mortar. A solid electrolyte material in sample 1 containing Li, Ca, Y, Gd, Br, and Cl was thereby obtained.

(Evaluation of ionic conductivity)

Fig. 6 is a schematic illustration of a press forming die 200 used to evaluate the ionic conductivity of the solid electrolyte material.

The press forming die 200 includes an upper punch 201, a frame die 202, and a lower punch 203. The frame die 202 is formed of insulating polycarbonate. The upper punch 201 and the lower punch 203 are formed of electron conductive stainless steel.

The press forming die 200 shown in Fig. 6 was used to measure the impedance of the solid electrolyte material in sample 1 using the following method.

The solid electrolyte material powder in sample 1 was filled into the press forming die 200 in the dry argon atmosphere. The upper punch 201 and the lower punch 203 were used to apply a pressure of 300 MPa to the solid electrolyte material in sample 1 disposed inside the press forming die 200.

With the pressure applied, the upper punch 201 and the lower punch 203 were connected to a potentiostat (VersaSTAT 4, Princeton Applied Research) equipped with a frequency response analyzer. The upper punch 201 was connected to a working electrode and a potential measurement terminal. The lower punch 203 was connected to a counter electrode and a reference electrode. The impedance of the solid electrolyte material was measured at room temperature using an electrochemical impedance measurement method.

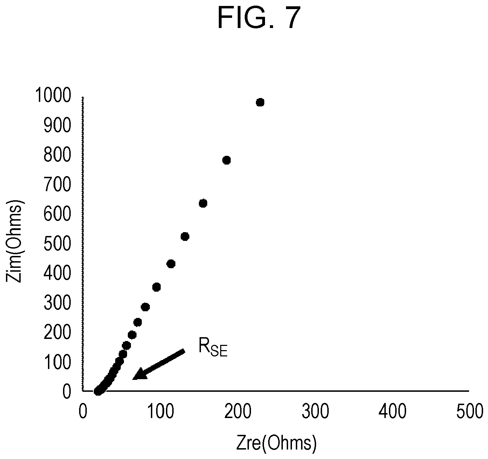

Fig. 7 is a graph showing a Cole-Cole plot obtained by the measurement of the impedance of the solid electrolyte material in sample 1.

In Fig. 7, the real value of the complex impedance at a measurement point at which the absolute value of the phase of the complex impedance was minimum was regarded as the ionic conduction resistance of the solid electrolyte material. See an arrow $R_{SE}$ shown in Fig. 7 for this real value. This resistance value was used to compute the ionic conductivity from the following formula (3).

$$\sigma = (R_{SE} \times S/t)^{-1} \quad (3)$$

Here, $\sigma$ represents the ionic conductivity. S represents the area of contact between the solid electrolyte material and the upper punch 201 (that is equal to the crosssectional area of a hollow portion of the frame die 202 in Fig. 6). $R_{SE}$ represents the resistance value of the solid electrolyte material in the impedance measurement. t represents the thickness of the solid electrolyte material (the thickness of a layer formed of the solid electrolyte material powder 101 in Fig. 6).

The ionic conductivity of the solid electrolyte material in sample 1 was $2.5 \times 10^{-3}$ S/cm as measured at 25°C.

<Samples 2 to 24>

(Production of solid electrolyte materials)

For samples 2 to 7 and 24, the same procedure as in sample 1 was repeated except that the heat treatment temperature was changed, and solid electrolyte materials in samples 2 to 7 and 24 were thereby obtained. The heat treatment temperatures are shown in Table 1.

For samples 8 to 18 and 23, instead of the heat treatment at 500°C for 1 hour in sample 1, two-stage heat treatment was performed. The mixture of the raw materials was heat-treated at temperature T1 for 15 hours and then heat-treated at temperature T2 for 1 hour. Solid electrolyte materials in samples 8 to 18 and 23 were obtained using the same procedure as in sample 1 except for the above operation. The values of the temperatures T1 and T2 are shown in Table 1.

For sample 19, powders of $Y_2O_3$, $Gd_2O_3$, $NH_4Br$, $LiCl$, and $CaCl_2$ were prepared as raw material powders in the dry argon atmosphere such that the molar ratio $Y_2O_3:Gd_2O_3:NH_4Br:LiCl:CaCl_2 = 0.25:0.25:6.6:2.85:0.075$. These materials were pulverized in an agate mortar and mixed. The mixture obtained was placed in an alumina crucible and heat-treated in a nitrogen atmosphere at 240°C for 15 hours and then heat-treated at 500°C for 1 hour. The heat-treated product obtained was pulverized in an agate mortar. A solid electrolyte material in sample 19 was thereby obtained.

For sample 20, powders of $Y_2O_3$, $Gd_2O_3$, $NH_4Br$, $LiBr$, and $CaBr_2$ were prepared as raw material powders such that the molar ratio $Y_2O_3:Gd_2O_3:NH_4Br:LiBr:CaBr_2 = 0.25:0.25:6.6:2.85:0.075$. A solid electrolyte material in sample 20 was obtained using the same procedure as in sample 19 except for the above operation.

For sample 21, powders of $Y_2O_3$, $GdCl_3$, $NH_4Cl$, $LiCl$, $LiBr$, and $CaBr_2$ were prepared as raw material powders in the dry argon atmosphere such that the molar ratio $Y_2O_3:GdCl_3:NH_4Cl:LiCl:LiBr:CaBr_2 = 0.25:0.25:3.3:0.5:2.35:0.075$. These materials were pulverized in an agate mortar and mixed. The mixture obtained was placed in an alumina crucible and heat-treated in a nitrogen atmosphere at 200°C for 15 hours and then heat-treated at 500°C for 1 hour. The heat-treated product obtained was pulverized in an agate mortar. A solid electrolyte material in sample 21 was thereby obtained.

For sample 22, powders of $YCl_3$, $Gd_2O_3$, $NH_4Cl$, $LiCl$, $LiBr$, and $CaBr_2$ were prepared as raw material powders such that the molar ratio $YCl_3:Gd_2O_3:NH_4Cl:LiCl:LiBr:CaBr_2 = 0.25:0.25:3.3:0.5:2.35:0.075$. A solid electrolyte material in sample 22 was obtained using the same procedure as in sample 21 except for the above operation.

(Evaluation of ionic conductivity)

The ionic conductivity of each of the solid electrolyte materials in samples 2 to 24 was measured in the same manner as in sample 1. The measurement results are shown in Table 1.

In Table 1, raw material 1 is an oxide or halide containing Y. Raw material 2 is an oxide or halide containing Gd. Raw material 3 is ammonium halide. Raw material 4 is $LiCl$. Raw material 5 is $LiBr$. Raw material 6 is a halide containing Ca.

[Table 1]

| | Raw material 1 | Raw material 2 | Raw material 3 | Raw material 6 | Molar ratio of raw materials Raw material 1: raw material 2:raw material 3:raw material 4:raw material 5:raw material 6 | Heat treatment temperature | | Ionic conductivity (S/cm) |
|---|---|---|---|---|---|---|---|---|
| | | | $NH_4\alpha$ | $Ca\gamma_2$ | | T1 (°C) | T2 (°C) | |
| Sample 1 | $Y_2O_3$ | $Gd_2O_3$ | $NH_4Cl$ | $CaBr_2$ | 0.25:0.25:6.6: 0.5:2.35:0.075 | 500 | | $2.5\times10^{-3}$ |
| Sample 2 | $Y_2O_3$ | $Gd_2O_3$ | $NH_4Cl$ | $CaBr_2$ | 0.25:0.25:6.6: 0.5:2.35:0.075 | 350 | | $3.2\times10^{-4}$ |
| Sample 3 | $Y_2O_3$ | $Gd_2O_3$ | $NH_4Cl$ | $CaBr_2$ | 0.25:0.25:6.6: 0.5:2.35:0.075 | 400 | | $5.2\times10^{-4}$ |
| Sample 4 | $Y_2O_3$ | $Gd_2O_3$ | $NH_4Cl$ | $CaBr_2$ | 0.25:0.25:6.6: 0.5:2.35:0.075 | 450 | | $2.8\times10^{-3}$ |
| Sample 5 | $Y_2O_3$ | $Gd_2O_3$ | $NH_4Cl$ | $CaBr_2$ | 0.25:0.25:6.6: 0.5:2.35:0.075 | 550 | | $3.4\times10^{-3}$ |
| Sample 6 | $Y_2O_3$ | $Gd_2O_3$ | $NH_4Cl$ | $CaBr_2$ | 0.25:0.25:6.6: 0.5:2.35:0.075 | 600 | | $2.8\times10^{-3}$ |
| Sample 7 | $Y_2O_3$ | $Gd_2O_3$ | $NH_4Cl$ | $CaBr_2$ | 0.25:0.25:6.6: 0.5:2.35:0.075 | 650 | | $2.8\times10^{-3}$ |
| Sample 8 | $Y_2O_3$ | $Gd_2O_3$ | $NH_4Cl$ | $CaBr_2$ | 0.25:0.25:6.6: 0.5:2.35:0.075 | 160 | 500 | $3.0\times10^{-3}$ |
| Sample 9 | $Y_2O_3$ | $Gd_2O_3$ | $NH_4Cl$ | $CaBr_2$ | 0.25:0.25:6.6: 0.5:2.35:0.075 | 180 | 500 | $3.3\times10^{-3}$ |
| Sample 10 | $Y_2O_3$ | $Gd_2O_3$ | $NH_4Cl$ | $CaBr_2$ | 0.25:0.25:6.6: 0.5:2.35:0.075 | 200 | 350 | $1.7\times10^{-4}$ |
| Sample 11 | $Y_2O_3$ | $Gd_2O_3$ | $NH_4Cl$ | $CaBr_2$ | 0.25:0.25:6.6: 0.5:2.35:0.075 | 200 | 400 | $1.0\times10^{-4}$ |
| Sample 12 | $Y_2O_3$ | $Gd_2O_3$ | $NH_4Cl$ | $CaBr_2$ | 0.25:0.25:6.6: 0.5:2.35:0.075 | 200 | 450 | $2.9\times10^{-3}$ |
| Sample 13 | $Y_2O_3$ | $Gd_2O_3$ | $NH_4Cl$ | $CaBr_2$ | 0.25:0.25:6.6: 0.5:2.35:0.075 | 200 | 500 | $3.1\times10^{-3}$ |
| Sample 14 | $Y_2O_3$ | $Gd_2O_3$ | $NH_4Cl$ | $CaBr_2$ | 0.25:0.25:6.6: 0.5:2.35:0.075 | 200 | 550 | $2.8\times10^{-3}$ |
| Sample 15 | $Y_2O_3$ | $Gd_2O_3$ | $NH_4Cl$ | $CaBr_2$ | 0.25:0.25:6.6: 0.5:2.35:0.075 | 200 | 600 | $1.6\times10^{-3}$ |
| Sample 16 | $Y_2O_3$ | $Gd_2O_3$ | $NH_4Cl$ | $CaBr_2$ | 0.25:0.25:6.6: 0.5:2.35:0.075 | 200 | 650 | $1.8\times10^{-3}$ |
| Sample 17 | $Y_2O_3$ | $Gd_2O_3$ | $NH_4Cl$ | $CaBr_2$ | 0.25:0.25:6.6: 0.5:2.35:0.075 | 250 | 500 | $3.2\times10^{-3}$ |
| Sample 18 | $Y_2O_3$ | $Gd_2O_3$ | $NH_4Cl$ | $CaBr_2$ | 0.25:0.25:6.6: 0.5:2.35:0.075 | 300 | 500 | $3.3\times10^{-3}$ |
| Sample 19 | $Y_2O_3$ | $Gd_2O_3$ | $NH_4Br$ | $CaCl_2$ | 0.25:0.25:6.6: 2.85:0:0.075 | 240 | 500 | $2.0\times10^{-3}$ |

(continued)

| | Raw material 1 | Raw material 2 | Raw material 3 | Raw material 6 | Molar ratio of raw materials Raw material 1: raw material 2:raw material 3:raw material 4:raw material 5:raw material 6 | Heat treatment temperature | | Ionic conductivity (S/cm) |
|---|---|---|---|---|---|---|---|---|
| | | | $NH_4\alpha$ | $Ca\gamma_2$ | | T1 (°C) | T2 (°C) | |
| Sample 20 | $Y_2O_3$ | $Gd_2O_3$ | $NH_4Br$ | $CaBr_2$ | 0.25:0.25:6.6:0:2.85:0.075 | 240 | 500 | $1.0\times10^{-3}$ |
| Sample 21 | $Y_2O_3$ | $GdCl_3$ | $NH_4Cl$ | $CaBr_2$ | 0.25:0.25:3.3:0.5:2.35:0.075 | 200 | 500 | $2.4\times10^{-3}$ |
| Sample 22 | $YCl_3$ | $Gd_2O_3$ | $NH_4Cl$ | $CaBr_2$ | 0.25:0.25:3.3:0.5:2.35:0.075 | 200 | 500 | $2.6\times10^{-3}$ |
| Sample 23 | $Y_2O_3$ | $Gd_2O_3$ | $NH_4Cl$ | $CaBr_2$ | 0.25:0.25:6.6:0.5:2.35:0.075 | 200 | 300 | $4.0\times10^{-9}$ |
| Sample 24 | $Y_2O_3$ | $Gd_2O_3$ | $NH_4Cl$ | $CaBr_2$ | 0.25:0.25:6.6:0.5:2.35:0.075 | 300 | | $3.0\times10^{-9}$ |

<Discussion>

As can be seen from samples 1 to 24, the solid electrolyte materials obtained have an ionic conductivity higher than or equal to $3.0\times10^{-9}$ S/cm.

As can be seen from samples 8 to 22, even when the heat treatment step includes two sub-steps, the solid electrolyte materials obtained have high ionic conductivity.

As can be seen by comparing samples 1 to 22 with samples 23 and 24, when the step in which the heat treatment temperature is higher than or equal to 350°C is included, the solid electrolyte material obtained has higher ionic conductivity. As can be seen by comparing samples 1 and 4 to 7 with samples 2 and 3, when the heat treatment temperature is higher than or equal to 450°C and lower than or equal to 650°C, the ionic conductivity of the solid electrolyte material is further increased. As can be seen by comparing samples 8, 9, and 12 to 22 with samples 10 and 11, even in the case where the heat treatment step includes two sub-steps, when the second heat treatment temperature T2 is higher than or equal to 450°C and lower than or equal to 650°C, the ionic conductivity of the solid electrolyte material is further increased.

As described above, the solid electrolyte materials produced by the production method of the present disclosure have high lithium ion conductivity. Moreover, the production method of the present disclosure is a simple method and is a method with high industrial productivity. The method with high industrial productivity is, for example, a method capable of mass production at low cost.

Industrial Applicability

The production method of the present disclosure is used, for example, as a method for producing a solid electrolyte material. The solid electrolyte material produced by the production method of the present disclosure is used, for example, for an all-solid-state lithium ion secondary battery.

Reference Signs List

101    solid electrolyte material powder

200    press forming die

201    upper punch

202     frame die

203     lower punch

**Claims**

1.  A method for producing a halide, the method comprising:

    a heat treatment step of heat-treating a material mixture containing a compound containing Y, a compound containing Gd, $NH_4\alpha$, $Li\beta$, and $Ca\gamma_2$ in an inert gas atmosphere,
    wherein the compound containing Y is at least one selected from the group consisting of $Y_2O_3$ and $Y\delta_3$,
    wherein the compound containing Gd is at least one selected from the group consisting of $Gd_2O_3$ and $Gd\epsilon_3$,
    wherein the material mixture contains at least one selected from the group consisting of $Y_2O_3$ and $Gd_2O_3$, and
    wherein $\alpha$, $\beta$, $\gamma$, $\delta$, and $\epsilon$ are each independently at least one selected from the group consisting of F, Cl, Br, and I.

2.  The method for producing according to claim 1, wherein the material mixture contains $Y_2O_3$, $Gd_2O_3$, $NH_4\alpha$, $Li\beta$, and $Ca\gamma_2$.

3.  The method for producing according to claim 1 or 2, wherein, in the heat treatment step, the material mixture is heat-treated at higher than or equal to 350°C.

4.  The method for producing according to any one of claims 1 to 3, wherein, in the heat treatment step, the material mixture is heat-treated at lower than or equal to 700°C.

5.  The method for producing according to claim 4, wherein, in the heat treatment step, the material mixture is heat-treated at lower than or equal to 650°C.

6.  The method for producing according to any one of claims 1 to 5, wherein, in the heat treatment step, the material mixture is heat-treated in more than or equal to 1 hour and less than or equal to 72 hours.

7.  The method for producing according to claim 1 or 2, wherein the heat treatment step includes a first heat treatment step and a second heat treatment step performed after the first heat treatment step,

    wherein, in the first heat treatment step, the material mixture is heat-treated at first heat treatment temperature T1,
    wherein, in the second heat treatment step, the material mixture is heat-treated at second heat treatment temperature T2, and
    wherein the second heat treatment temperature T2 is higher than or equal to 350°C and is higher than the first heat treatment temperature T1.

8.  The method for producing according to claim 7, wherein the first heat treatment temperature T1 is higher than or equal to 160°C and lower than 350°C.

9.  The method for producing according to claim 7 or 8, wherein the second heat treatment temperature T2 is lower than or equal to 700°C.

10. The method for producing according to any one of claims 7 to 9, wherein, in the first heat treatment step, the material mixture is heat-treated in more than or equal to 1 hour and less than or equal to 72 hours.

11. The method for producing according to any one of claims 7 to 10, wherein, in the second heat treatment step, the material mixture is heat-treated in more than or equal to 1 hour and less than or equal to 72 hours.

12. The method for producing according to any one of claims 7 to 11, wherein a time period for heat-treating the material mixture in the first heat treatment step is more than a time period for heat-treating the material mixture in the second heat treatment step.

13. The method for producing according to any one of claims 1 to 12, wherein $\alpha$, $\beta$, $\gamma$, $\delta$, and $\epsilon$ are each independently at least one selected from the group consisting of Cl and Br.

# FIG. 1

```
┌──────────────┐
│    START     │
└──────┬───────┘
       │            ⌒ S1000
┌──────▼───────────────────┐
│   HEAT TREATMENT STEP     │
└──────┬───────────────────┘
       │
┌──────▼───────┐
│     END      │
└──────────────┘
```

# FIG. 2

```
┌──────────────┐
│    START     │
└──────┬───────┘
       │            ⌒ S1100
┌──────▼───────────────────┐
│       MIXING STEP         │
└──────┬───────────────────┘
       │            ⌒ S1000
┌──────▼───────────────────┐
│   HEAT TREATMENT STEP     │
└──────┬───────────────────┘
       │
┌──────▼───────┐
│     END      │
└──────────────┘
```

## FIG. 3

```
         ┌──────────────┐
         │    START     │
         └──────────────┘
                │
                ▼           ∼S1200
    ┌───────────────────────────┐
    │     PREPARATION STEP      │
    └───────────────────────────┘
                │
                ▼           ∼S1100
    ┌───────────────────────────┐
    │        MIXING STEP        │
    └───────────────────────────┘
                │
                ▼           ∼S1000
    ┌───────────────────────────┐
    │    HEAT TREATMENT STEP    │
    └───────────────────────────┘
                │
                ▼
         ┌──────────────┐
         │     END      │
         └──────────────┘
```

## FIG. 4

```
         ┌──────────────┐
         │    START     │
         └──────────────┘
                │           ∼S1000
    ┌ ─ ─ ─ ─ ─ ─│─ ─ ─ ─ ─ ─ ─ ─ ─ ┐
    │            ▼           ∼S1001  │
    │  ┌───────────────────────────┐ │
    │  │  FIRST HEAT TREATMENT STEP│ │
    │  └───────────────────────────┘ │
    │            │           ∼S1002  │
    │            ▼                    │
    │  ┌───────────────────────────┐ │
    │  │ SECOND HEAT TREATMENT STEP│ │
    │  └───────────────────────────┘ │
    └ ─ ─ ─ ─ ─ ─│─ ─ ─ ─ ─ ─ ─ ─ ─ ┘
                │
                ▼
         ┌──────────────┐
         │     END      │
         └──────────────┘
```

# FIG. 5

# FIG. 6

# FIG. 7

## INTERNATIONAL SEARCH REPORT

| International application No. |
|---|
| PCT/JP2021/008437 |

**A. CLASSIFICATION OF SUBJECT MATTER**
Int. Cl. C01F17/36(2020.01)i, C01F17/10(2020.01)i, H01B13/00(2006.01)i, H01M10/052(2010.01)i, H01M10/0562(2010.01)i
FI: C01F17/36, C01F17/10, H01M10/0562, H01B13/00 Z, H01M10/052
According to International Patent Classification (IPC) or to both national classification and IPC

**B. FIELDS SEARCHED**

Minimum documentation searched (classification system followed by classification symbols)
Int. Cl. C01F17/36, C01F17/10, H01B13/00, H01M10/052, H01M10/0562

Documentation searched other than minimum documentation to the extent that such documents are included in the fields searched
Published examined utility model applications of Japan       1922-1996
Published unexamined utility model applications of Japan     1971-2021
Registered utility model specifications of Japan             1996-2021
Published registered utility model applications of Japan     1994-2021

Electronic data base consulted during the international search (name of data base and, where practicable, search terms used)
CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | KOWALCZYK, Ewa et al. Studies on the reaction of ammonium fluoride with lithium carbonate and yttrium oxide, Thermochimica Acta, 1995, vol. 265, pp. 189-195, abstract, experimental | 1-13 |
| A | WO 2019/135343 A1 (PANASONIC INTELLECTUAL PROPERTY MANAGEMENT CO., LTD.) 11 July 2019, claims, examples | 1-13 |
| A | WO 2017/013867 A1 (PANASONIC INTELLECTUAL PROPERTY MANAGEMENT CO., LTD.) 26 January 2017, claims, examples | 1-13 |
| A | JP 2013-500379 A (SUNGKYUNKWAN UNIVERSITY RESEARCH & BUSINESS FOUNDATION) 07 January 2013, claims, examples | 1-13 |

☒ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26.04.2021 | 11.05.2021 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2021/008437 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | US 2016/0028105 A1 (BROOKHAVEN SCIENCE ASSOCIATES, LLC) 28 January 2016, claims, examples | 1-13 |
| P, A | WO 2020/137189 A1 (PANASONIC INTELLECTUAL PROPERTY MANAGEMENT CO., LTD.) 02 July 2020, claims, examples, paragraph [0055] | 1-13 |

Form PCT/ISA/210 (continuation of second sheet) (January 2015)

**INTERNATIONAL SEARCH REPORT**

Information on patent family members

International application No.

PCT/JP2021/008437

| Patent Documents referred to in the Report | Publication Date | Patent Family | Publication Date |
|---|---|---|---|
| WO 2019/135343 A1 | 11.07.2019 | US 2020/0212481 A1 claims, examples CN 111344811 A | |
| WO 2017/013867 A1 | 26.01.2017 | US 2018/0163127 A1 claims, examples CN 107848830 A | |
| JP 2013-500379 A | 07.01.2013 | US 2012/0187339 A1 claims, examples WO 2011/014010 A2 EP 2471890 A2 KR 10-2011-0011586 A CN 102625820 A | |
| US 2016/0028105 A1 | 28.01.2016 | WO 2013/165953 A1 claims, examples | |
| WO 2020/137189 A1 | 02.07.2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018025582 A